**Europäisches Patentamt**

**European Patent Office**

**Office européen des brevets**

(19)

(11) Publication number : **0 495 597 A1**

(12) # EUROPEAN PATENT APPLICATION

(21) Application number : **92300249.7**

(22) Date of filing : **10.01.92**

(51) Int. Cl.⁵ : **G11B 7/09, G11B 7/095**

(30) Priority : **17.01.91 JP 44575/91**

(43) Date of publication of application :
**22.07.92 Bulletin 92/30**

(84) Designated Contracting States :
**DE FR GB**

(71) Applicant : **International Business Machines Corporation**
**Old Orchard Road**
**Armonk, N.Y. 10504 (US)**

(72) Inventor : **Kagami, Naoyuki**
**Shonanlifetownhanezawadanchi 26-305, 921 Banchi**
**endoh, Fujisawa-shi, Kanagawa-ken (JP)**
Inventor : **Kubo, Hiroaki**
**425-3 De-machi, Oomihachiman-shi**
**Shiga-ken (JP)**
Inventor : **Nakase, Kohji**
**1624-35 Nanasawa**
**Atsugi-shi, Kanagawa-ken (JP)**

(74) Representative : **Blakemore, Frederick Norman**
**IBM United Kingdom Limited Intellectual Property Department Hursley Park**
**Winchester Hampshire SO21 2JN (GB)**

(54) **Method of and apparatus for holding an optical disk drive head stationary.**

(57)    An optical disk drive comprises a disk load mechanism for loading and unloading an optical disk (20) at a predetermined position. An optical head (10) applies a laser beam to a loaded disk. Guide means guides the optical head (10) in the radial direction of the disk (20). Drive means (14) drives the head (10). Control means (30) determines driving force of the drive means (14) based on positional information corresponding to the head (10). The control means (30) is configured to calculate a control value for determining driving force applied to the head (10) to move the head (10) at a constant velocity in the radial direction of the disk (20) and to hold the head (10) stationary as a function of the control value. The head (10) can thus be held stationary without the need for a dedicated sensor for detecting an absolute position in the radial direction of the disk (20) or for mechanical latch for holding the head in position..

FIG. 1

EP 0 495 597 A1

Jouve, 18, rue Saint-Denis, 75001 PARIS

The present invention generally relates to optical disk drives and particularly relates to a method of and apparatuus for holding an optical disk drive head stationary.

Generally, in an optical disk drive, a Tracking Error Signal (TES) indicates the positional deviation of the optical head from a track on an optical disk. Similarly, a Focusing Error Signal (FES) indicates the deviation from focus of the light beam generated by the head. To achieve acceptable tracking and focus control, the head must be held stationary at an absolute position radially of the disk dring correction of the respective amplitudes and offset of the TFS and FES. The TES is then generated if the disk and the drive carrying the disk are non co-axial.

Conventional optical disk drives are provided with a dedicated sensor for detecting the absolute position of the head radially of the disk. The drive is controlled to hold the head stationary as a function of the output of the sensor. However, the sensor increases the number of components in the drive and therefore limits the size to which the drive may be reduced. In other conventional optical disk drives, the head may be held in position by a mechanical latch mechanism. However, this also limits the size to which the drive may be reduced.

In accordance with the present invention, there is now provided a method of holding an optical disk drive head stationary, wherein a control value applied to the head, for moving the head at a constant velocity in the radial direction of a optical disk is obtained and the head is held stationary as a function of the control value.

This advantageously provides an optical disk drive in which a dedicated sensor for detecting the absolute head position radially of the optical disk or a mechanical latch mechanism for holding the head in position are not required.

Viewing the present invention from a second aspect, there is provided, s method of holding an optical disk drive head stationary comprising: determining a velocity control value for actuating the head to radially traverse a plurality of tracks of an optical disk at a constant velocity; decelerating the head to a halt; and holding the head stationary as a function of the velocity control value.

The present invention is based on the realisation that forces acting on the head in a radial direction of the disk are balanced when the head moves with constant velocity. Therefore, if a control value Uo such as, for example, a driving voltage for moving the head at a constant velocity is applied to the head once it is stationary, the forces acting on the head are also balanced. The present invention therefore identifies a control value for moving the head at a constant velocity radially of the disk and then uses the control value hold the head stationary. Thus, in accordance with the present invention, the TES and the FES can be corrected without the need for a dedicated sensor for detecting an absolute position of the head radially of the disk or for mechanical means for holding the head in position. Force acting on the head radially of the disk may include driving force received from the head drive (the driving force is determined by the control value), frictional force between a rail supporting the optical head for movement radially of the disk and bearings on the head, a component of gravity radially of the disk caused by tilting the optical disk drive, tension in cables attached to the head, and the like.

In a preferred embodiment of the present invention, there is provided an optical disk drive comprising: a disk load mechanism for loading and unloading an optical disk at a predetermined position; an optical head for applying a laser beam to the optical disk; guide means for guiding the optical head in the radial direction of the optical disk; drive means for driving the optical head; and control means for determining driving force of the drive means based on positional information corresponding to the optical head; characterised in that the control means comprises: means for calculating a control value for determining driving force applied to the optical head to move the optical head at a constant velocity in the radial direction of the optical disk; and means for holding the optical head stationary as a function of the control value.

In a preferred method of holding an optical disk drive head stationary in accordance with the present invention, the head is initially moved with constant velocity, and a corresponding control value such as, for example, a digital value determining a drive voltage applied to a VCM (Voice Coil Motor) for driving the head is identified and stored. The head is then decelerated to a halt and the control value is applied again to hold the head stationary. The amplitude and offset values of the TES detected from the stationary head are then corrected. The above operations are repeated, as required, at different positions on the disk. For example, the head is stopped at a predetermined position near the centre of the optical disk or at a predetermined position near its circumference to correct a TES. The TES and the FES may be simultaneously corrected.

A preferred embodiment of the present invention will now be described, by way of example only, with reference to the accompanying drawings in which:

Figure 1 is a block diagram of an optical disk drive of the present invention;

Figure 2 is a flowchart corresponding to a method of holding the head of the optical disk drive stationary in accordance with the present invention; and

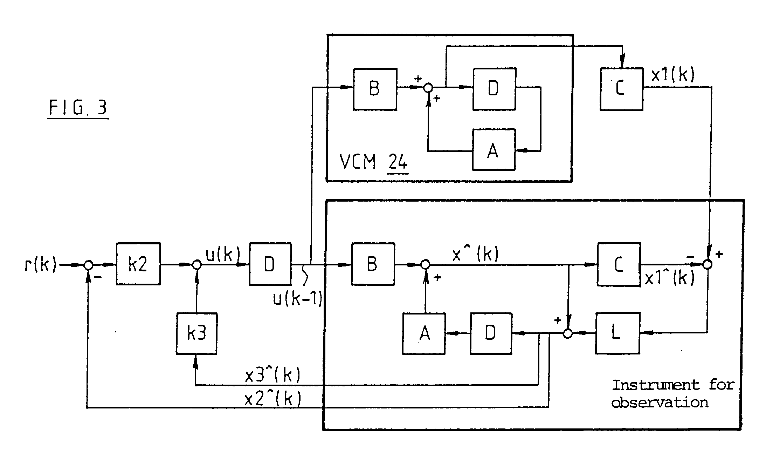

Figure 3 is a block diagram of digital servo control of the head in the optical disk drive of the present invention.

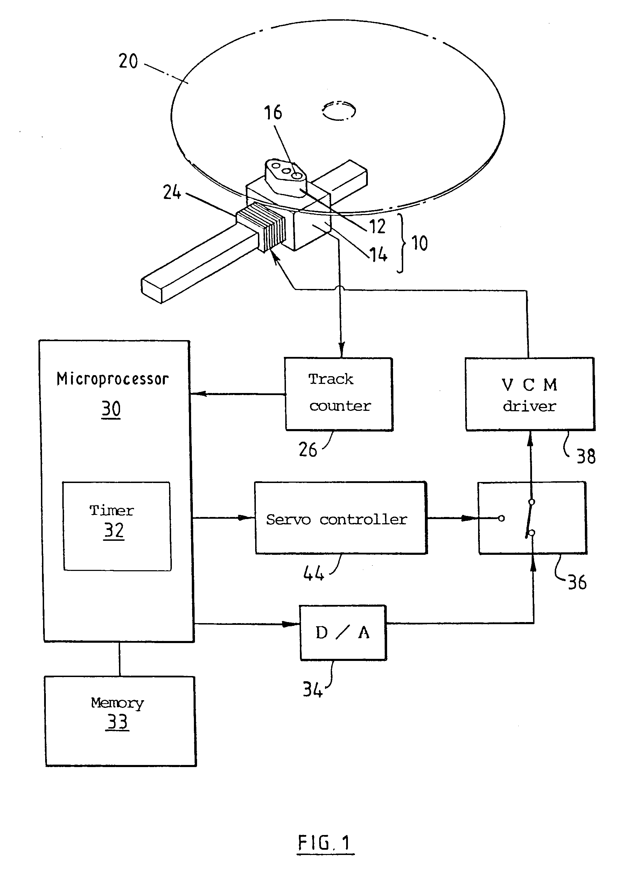

Referring to Figure 1, an optical disk drive of the present invention comprises an optical head 10 including

EP 0 495 597 A1

a rotary actuator 12 and a linear actuator 14. The rotary actuator 12, called a fine actuator, is provided with an objective lens 16 for irradiating a laser beam on an optical disk 20 and is supported for rotation by the linear actuator 14. The linear actuator 14, culled a coarse actuator, can be moved along a guide rail 18 radially of the optical disk 20 under the action of a VCM (Voice Coil Motor) 24.

The optical head 10 generates a Tracking Error Signal (TES). The TES indicates any deviation, relative to a track, of the laser spot. A track counter 26 counts the number of occurrences of the TES. The count is provided to a microprocessor 30. The microprocessor 30 is provided with a timer 32. The microprocessor 30 outputs a digital control value for controlling the movement of the head 10 to a D/A converter 34. The digital control value is retained in a memory 33. An analogue value from the D/A converter 34 is provided, through a switch 36, to a VCM driver 38. A driving voltage or current based on the analog value is supplied to the VCM 24 by the VCM driver 38. A servo controller 42 controls the linear actuator 14 as a function of a signal from a sensor (not shown) for detecting a rotational angle of the rotary actuator 12 relative to the linear actuator 14. The servo controller 42 supplies driving voltage or current to the VCM 24 to reduce the rotational angle to zero.

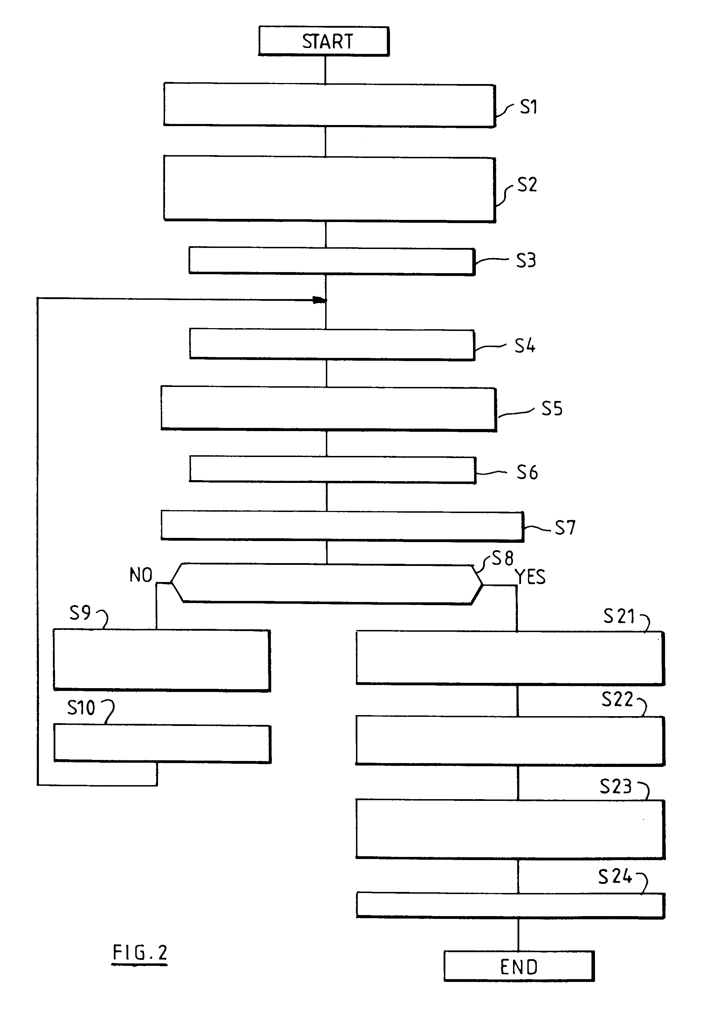

The optical disk drive of the present invention will now be described in operation with reference to figure 2. Assuming that the switch 36 is turned to the D/A converter 34, in step S1, the head 10 is moved to an innermost position of the disk 20. The drive is provided with a pair of stops for limiting movement of the head 10. Step 1 is realised when the head 10 abuts against the innermost stop. However, if a mirror region, in which track grooves do not exist, is provided at the innermost position on the disk, the head 10 stops at the mirror region.

In step S2, the head 10 is moved outwardly towards the outer circumference of the disk 20. A check of TES occurrences is made to see if the head 10 actually starts to move. More particularly, in step S2, the VCM voltage is slowly increased to move the head 10 toward the outer circumference of the disk 20. TES occurrences are detected to determine if the TES occurs more than the predetermined number of times during a predetermined period. This technique is used to determine if the head 10 moves because a TES occurs when the disk 20 rotates non-coxially even if the head 10 is stationary and the movement of the head 10, therefore, cannot be determined by only detecting occurrences of the TES.

In step 3 and subsequent steps, the head 10 is controlled for movement at a constant velocity. The head 10 moves, under digital control, at a constant velocity regardless of the initial velocity at which the head starts to move. First, in step S3, all parameters are reset to initialise control. State variables and parameters are shown in Expression 1 below. A block diagram of the digital servo control is shown in Figure 4.

3

EXPRESSION 1

```
State variables:    x1(k)        : Actual position
                    x2(k)        : Actual velocity
                    x3(k)        : Actual external force

                    x1^(k)       : Estimated position
                    x2^(k)       : Estimated velocity
                    x3^(k)       : Estimated external force

                    u(k)         : Control value

                    r(k)         : Target velocity

                    x1(k)                    x1^(k)
           x(k)=    x2(k)        x^(k)=      x2^(k)
                    x3(k)                    x3^(k)

      Parameters:

                    1  1  1/2                  d • T²/2
           A =      0  1  1         B =        d • T²
                    0  0  1                     0

                    d            • System parameter
                    T            : Sampling period of time


                    11
           L =      12                C =    1  0  0

      11,12,13      : Instrumental parameters
      k2,k3         : State feedback parameters

      D = One-sampling time delay
```

In step S4, a digital control value u(k) is produced. However, step S4 is bypassed initially because the control value u(k) is not yet estimated. In step S5, estimated parameters are calculated in accordance with Expression 2 below.

EXPRESSION 2

$$x1^{\wedge}(k+1) = x1^{\wedge}(k) + x2^{\wedge}(k) + 1/2 \cdot x3^{\wedge}(k)$$
$$+ d \cdot T^2/2 \cdot u(k)$$
$$x2^{\wedge}(k+1) = x2^{\wedge}(k) + x3^{\wedge}(k) + d \cdot T^2 \, u(k)$$
$$x3^{\wedge}(k+1) = x3^{\wedge}(k)$$

As is obvious from the expressions, because velocity and estimated external force are taken into account, control can be stable to external disturbance such as variations in frictional force. Step S5 is initially passed.

After a sampling time in step S6, the count is read from the track counter 26 in a step S7. The count is x1(k), which is initially zero. Step S8 determines whether the count exceeds 3000. For movement at a constant velocity, a distance of 3000 tracks is considered to be a necessary and sufficient condition. If the count not greater than 3000, in step S9, estimated parameters are corrected based on the current track position, x1(k), using Expression 3 below. Initially, the operation starts at step S9.

EXPRESSION 3

$$x1 (k) = x1\wedge(k) + 11 \cdot ( x1(k) - x1\wedge(k) )$$
$$x2 (k) = x2\wedge(k) + 12 \cdot ( x1(k) - x1\wedge(k) )$$
$$x3 (k) = x3\wedge(k) + 13 \cdot ( x1(k) - x1\wedge(k) )$$

In Step S10, a control value u(k) is calculated using Expression 4.

EXPRESSION 4

$$u(k) = k2 \cdot ( r(k) - x2 (k) ) - k3 \cdot x3 (k)$$

The control value u(k) thus obtained is stored in step S4. This routine is repeated until step S8 determines that the head has moved a distance exceeding 3000 tracks.

When step S8 determines that the head has moved a distance exceeding 3000 tracks, in step S21, the average of the stored control values u(k) is calculated. The average can be calculated, for example, from control values u(k) obtained at eight positions in one rotation of the disk 20. The optical disk 20 usually rotates non-coaxially. Therefore, the head 10 can pass through tracks at either a high or a low velocity. The number of TES occurrences (the frequency of the TES) given by the count (x1(k)) from the track counter 26 therefore depends on the non-coaxial rotation of the disk. Therefore, a control value u(k) calculated from x1(k) depends on the non-coaxial rotation of the disk 20. To overcome this, the average of control values u(k) at plural positions in one rotation of the disk 20 may be calculated.

In step S22, a control value u(k) is produced for a predetermined period to decelerate the head to a halt. The magnitude of the VCM voltage corresponding to the decelerating control value is less than that of the VCM voltage generated from the average of the control values u(k) obtained in step S21 above. The VCM voltages also have opposite polarities. The time required for halting the head 10 can be predetermined. For voltage control, it is necessary to consider the back electromotive force in the VCM 24. In step S23, A VCM voltage is generated from the average of the control values u(k) obtained in step S21 to hold the head 10 stationary.

In step S24, the TES and FES are corrected with optical head 10 held stationary. First, the amplitude and offset values of the TES are adjusted to predetermined values respectively via a TES gain amplifier and a TES offset amplifier. The offset value of the FES is adjusted and then the TES is corrected again.

The present invention thus permits the head 10 to be held stationary without the need for a dedicated sensor for detecting an absolute position of the head 10 radially of the disk 20 or for a latch mechanism for holding the head in position. Furthermore, the present invention permits the head 10 to be held stationary as a function of the control values u(k) applied to the head 10 for moving it at a constant velocity. Thus, kinetic friction acting on the head 10 is accounted for to obtain high reliability. If the head 10 is held stationary as a function of a control value u(k) obtained as the head 10 begins moving, static friction acting on the head 10 is accounted for. In the latter case, excessive driving force must be applied to the head.

It will be appreciated that, in other embodiments of the present invention, the head may be held stationary for purposes other than the correction of a TES or a FES.

It will now be appreciated that the present invention provides apparatus for and a method of holding the head in an optical disk drive stationary without the need for a dedicated sensor for detecting an absolute position of the head radially of the disk or for a latch mechanism for holding the head in position.

**Claims**

1. A method of holding an optical disk drive head stationary comprising:
   determining a velocity control value for actuating the head to radially traverse a plurality of tracks of an optical disk at a constant velocity;
   decelerating the head to a halt; and
   holding the head stationary as a function of the velocity control value.

2. A method as claimed in claim 1 comprising:
   determining a plurality of interim control values each for actuating the head to radially traverse a plurality of tracks of an optical disk at a constant velocity at a corresponding one of a plurality of angular positions on the disk; and

averaging the interim control values to determine the velocity control value.

3. A method of holding an optical disk drive head stationary, wherein a control value applied to the head, for moving the head at a constant velocity in the radial direction of an optical disk is obtained and the head is held stationary as a function of the control value.

4. A method as claimed in Claim 3, wherein positional information of the head is detected at a predetermined interval, a velocity of the head is estimated based on the detected positional information, and the control value applied to the head is varied so that the estimated velocity converges to a constant value.

5. A method as claimed in Claim 4, wherein external force applied to the head, a velocity of the head, and a head position are estimated based on the positional information being detected, the preceding information detected and the control value.

6. A method as claimed in Claim 5, wherein control values applied to the head are detected a predetermined number of times while the optical head moves at a constant velocity and the head is kept in the stationary state by using the average of the control values.

7. A method as claimed in Claim 6, wherein the average of the control values is that of control values obtained at plural positions different from one another while the optical disk rotates once.

8. A method as claimed in any one of Claims 3 to 7, wherein the control values correspond to driving voltages supplied to driving means for the head.

9. An optical disk drive comprising:
   a disk load mechanism for loading and unloading an optical disk (20) at a predetermined position;
   an optical head (10) for applying a laser beam to the optical disk (20):
   guide means for guiding the head (10) in the radial direction of the disk (20):
   drive means (14) for driving the head (10); and
   control means (30) for determining driving force of the drive means (14) based on positional information corresponding to the head (10);
   characterised in that the control means (30) comprises:
   means for calculating a control value for determining driving force applied to the head (10) to move the head (10) at a constant velocity in the radial direction of the disk (10); and
   means for holding the head (10) stationary as a function of the control value.

10. An optical disk drive as claimed in claim 9 wherein the control value is calculated as a function of positional information of the head.

FIG. 1

FIG.2

F I G. 3

**European Patent Office**

## EUROPEAN SEARCH REPORT

Application Number

| DOCUMENTS CONSIDERED TO BE RELEVANT | | | EP 92300249.7 |
|---|---|---|---|
| Category | Citation of document with indication, where appropriate, of relevant passages | Relevant to claim | CLASSIFICATION OF THE APPLICATION (Int. Cl.5) |
| A | EP - A - 0 391 422 (TOSHIBA K.K.) * Fig. 8; abstract * -- | 1-9 | G 11 B 7/09 G 11 B 7/095 |
| A | EP - A - 0 372 650 (N.V. PHILIPS' GLOEILAMPEN-FABRIEKEN) * Fig. 1; abstract * -- | 1-9 | |
| A | EP - A - 0 368 585 (SONY CORPORATION) * Fig. 4; claim 1 * ---- | 1-9 | |
| | | | TECHNICAL FIELDS SEARCHED (Int. Cl.5) |
| | | | G 11 B 7/00 G 11 B 19/00 G 11 B 21/00 |

The present search report has been drawn up for all claims

| Place of search | Date of completion of the search | Examiner |
|---|---|---|
| VIENNA | 02-04-1992 | BERGER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P0401)

10